# EUROPÄISCHE PATENTSCHRIFT

(11) **EP 1 857 379 B1**
(45) Veröffentlichungstag und Bekanntmachung des Hinweises auf die Patenterteilung: **01.06.2011**
(21) Anmeldenummer: 07101978.0
(22) Anmeldetag: 08.02.2007
(51) Int. Cl.: B65G 1/04, B65G 47/53, B65H 19/12

(54) **Rollenlogistiksystem**
Roll logistics system
Système de logistique pour rouleaux

(30) Priorität: 10.05.2006 DE 102006021751
(43) Veröffentlichungstag der Anmeldung: 21.11.2007
(73) Patentinhaber: Koenig & Bauer Aktiengesellschaft, 97080 Würzburg (DE)
(72) Erfinder: Christoph, Claus, 97074, Würzburg (DE)
(74) Vertreter: Stiel, Jürgen

(56) Entgegenhaltungen:
- EP-A- 0 100 867
- JP-A- 60 127 942
- JP-A- 61 188 323
- US-A- 4 131 206
- US-A- 4 818 171
- US-A- 4 971 508
- "UN SYSTEME D'AMENEE DE BOBINES D'UN NOUVEAU GENRE CHEZ ROULARTA" NOUVELLES GRAPHIQUES, KEESING. DEURNE, BE, Bd. 40, Nr. 7, 1. April 1990 (1990-04-01), Seite 26,30, XP000132875 ISSN: 0029-4926

## Beschreibung

Die Erfindung betrifft ein Rollenlogistiksystem gemäß dem Oberbegriff des Anspruchs 1.

In größeren Druckanlagen existiert meist ein Papierrollenbeschickungssystem, bei welchem die Papierrollen auf automatisierten Wegen zu den Rollenwechslern transportiert werden. Oftmals werden automatische Rollenwechsler mit automatisierter Rollenbeschickung verwendet. Dabei werden die Papierrollen zumeist auf schienengebundenem Weg auf Rollenwagen zum Rollenwechsler transportiert. Am Rollenwechsler fährt der Rollenwagen in eine Schiene eines Transfertisches ein, mit dem die Papierrolle quer zum Transportweg zum Rollenwechsler transportiert und dort anschließend zwischen den Tragarmen des Rollenwechslers aufgeachst wird.

Bei einer solchen Art von automatisiertem Rollenbeschickungssystem ist es problematisch, wenn eine Papierrolle mit Rollenwagen an der Übergabestelle des Transfertisches ankommt und dieser noch nicht korrekt positioniert ist. Es kann dabei passieren, dass der Rollenwagen mit Papierrolle ungebremst in die unter dem Rollenwechsler angeordnete Grube fällt. Weiterhin kann eine Beschädigung des Rollenwagens, der Papierrolle und des Transfertisches eintreten, wenn die Fahrschiene des Transfertisches nicht mit der Schiene des Transportsystems in einer Flucht ausgerichtet ist.

Durch die DE 601 19 705 T2 ist ein Abwickelrollen-Transportwagen bekannt, auf dem ein Übergabeschlitten beweglich angeordnet ist. Die Positionen von Abwickelrollen-Transportwagen und Übergabeschlitten können jeweils festgestellt werden. Außerdem kann der Abwickelrollen-Transportwagen in seiner Position verriegelt werden.

Die JP 61-188323 A, die US 4 971 508 A, die US 4 131 206 A, die JP 60-127942 A, die EP 0 100 867 A1 und die US 4 818 171 A offenbaren Transportmittel mit Verriegelungsvorrichtungen. Ebenso der Artikel "Un système d'amenée de bobines d'un nouveau genre chez Rozularta" Nouvelles Graphiques, Keesing. Deurne, BE, Bd. 40, Nr. 7, 1. April 1990 (1990-04-01), Seite 26, 30, XP000132875, ISSN: 0029-4926.

Die JP 61-188323 A offenbart ein gattungsgemäßes Rollenlogistiksystem.

Der Erfindung liegt die Aufgabe zugrunde, die Sicherheit in Rollenlogistiksystemen zu verbessern.

Die Aufgabe wird erfindungsgemäß durch die Merkmale des Anspruchs 1 gelöst.

Die mit der Erfindung erzielbaren Vorteile bestehen insbesondere darin, dass zusätzliches Bedienpersonal an den Übergabestellen zur Überwachung der ordentlichen Übergabe einer Materialrolle, z. B. Papierrolle entfällt und weiterhin die Sicherheit in automatisierten oder auch manuell betätigten Rollenbeschickungssystemen verbessert wird. Aufgrund des einfachen Aufbaus ist die Vorrichtung sehr fehlersicher.

Eine Verriegelungsvorrichtung umfasst eine Sperrvorrichtung mit einer Betätigungsvorrichtung zum Lösen dieser Sperrvorrichtung und ggf. einen Positionsmelder und einen Positionssensor.

Erfindungsgemäß wird an einer Übergabestelle zwischen zwei Transporteinrichtungen zunächst eine STOPP-Position an einer ersten Transporteinrichtung vorgesehen. Das heißt eine mit einem ersten Transportmittel auf der ersten Transporteinrichtung geförderte Papierrolle wird an der STOPP-Position gestoppt, wenn eine zweites Transportmittel auf einer zweiten Transporteinrichtung, an welches das erste Transportmittel übergeben werden soll, nicht bzw. noch nicht eine vorbestimmte Übergabeposition eingenommen hat.

Zur Feststellung, ob das zweite Transportmittel die Übergabeposition eingenommen hat, ist an diesem der Positionsmelder vorgesehen. Der Positionssensor ist an der ersten Transporteinrichtung angeordnet, wobei die Anordnung derart erfolgt, dass Positionsmelder und Positionssensor miteinander kommunizieren, um die korrekte Lage, d. h. die Übergabeposition des zweiten Transportmittels zu ermitteln.

Positionsmelder und Positionssensor können auf unterschiedliche Weisen miteinander kommunizieren. Im einfachsten Fall ist der Positionsmelder ein mechanischer Anschlag und der Positionssensor ein Stift, welcher durch die Berührung des Anschlages die Betätigungsvorrichtung auslöst. Es können aber auch Lichtschranken, induktive oder magnetische Sensoren oder weitere Anordnungen als Positionsmelder und Positionssensor verwendet werden, deren Ausbau dem Fachmann dem Grunde nach bekannt sind.

Weiterhin ist die Sperrvorrichtung an der ersten Transporteinrichtung vorgesehen, welche standardmäßig ein auf der ersten Transporteinrichtung bewegtes erstes Transportmittel an der STOPP-Position anhält, wenn sich das zweite Transportmittel nicht in der Übergabeposition befindet. Sobald der Positionssensor ein Signal vom Positionsmelder empfängt, generiert dieser ein FREI-Signal, welches die Betätigungsvorrichtung aktiviert, die dann die Sperrvorrichtung löst und somit das erste Transportmittel freigibt.

Die Sperrvorrichtung kann je nach Transporteinrichtung unterschiedlich gestaltet sein. Bei der Verwendung einer schienengebundenen Transporteinrichtung ist die Sperrvorrichtung im einfachsten Fall eine Sperrklinke, die in eine Fahrschiene der ersten Transporteinrichtung hineinragt. Alternativ kann auch ein Keil eine Radbewegung bremsen oder eine Wirbelstrombremse eingesetzt werden. Dem Fachmann sind weitere Möglichkeiten bekannt, eine derart wirkende Sperrvorrichtung für eine Transporteinrichtung zu gestalten.

Erfindungsgemäß wird die Verriegelungsvorrichtung an der Übergabestelle zwischen einer Fahrschiene eines Rollenwagentransportsystems (erste Transporteinrichtung) und einem Transfertisch eines Rollenwechslers (zweites Transportmittel) vorgesehen.

Die folgende Beschreibung bezieht sich auf diese Ausführungsform, jedoch ist die Verriegelungsvorrichtung auch an Übergabestellen anderer Transporteinrichtungen einsetzbar, wie z. B. an Auspackstationen oder Klebevorbereitungsstationen.

Die Sperrvorrichtung ist in der bevorzugten Ausführungsform eine mechanische Sperrklinke, welche vorzugsweise an einer STOPP-Position in die Fahrschiene hineinragt und dabei mindestens ein Rad eines in der Fahrschiene bewegbaren Rollenwagens blockiert. Symmetrische Sperrvorrichtungen, welche auf beide Fahrschienen wirken, sind zu bevorzugen, um ein Verkanten des Rollenwagens in der Fahrschiene zu verhindern.

Die Betätigungsvorrichtung ist derart aufgebaut, dass sie bei Einnahme einer Übergabeposition durch das zweite Transportmittel vom Positionsmelder ein FREI-Signal empfängt und die Sperrvorrichtung löst. Dies kann im wiederum einfachsten Fall dadurch geschehen, dass der als beweglicher Stift ausgeführte Positionsmelder einen weiteren mechanischen Anschlag betätigt, der die Sperrung aufhebt. Auch hier sind viele verschiedene Ausführungsformen denkbar.

Ein Ausführungsbeispiel der Erfindung ist in den Zeichnungen dargestellt und wird im Folgenden näher beschrieben.

Es zeigen:
- Fig. 1: eine Übergabestelle zwischen einem schienengebundenen Rollentransportsystem und einem Transfertisch in zwei Ansichten a) und b);
- Fig. 2: eine Detaildarstellung einer Verriegelungsvorrichtung;
- Fig. 3: eine Teilansicht im Schnitt gemäß der Schnittlinie A - A in Fig. 1;
- Fig. 4: eine Teilansicht im Schnitt gemäß der Schnittlinie B - B in Fig. 3.

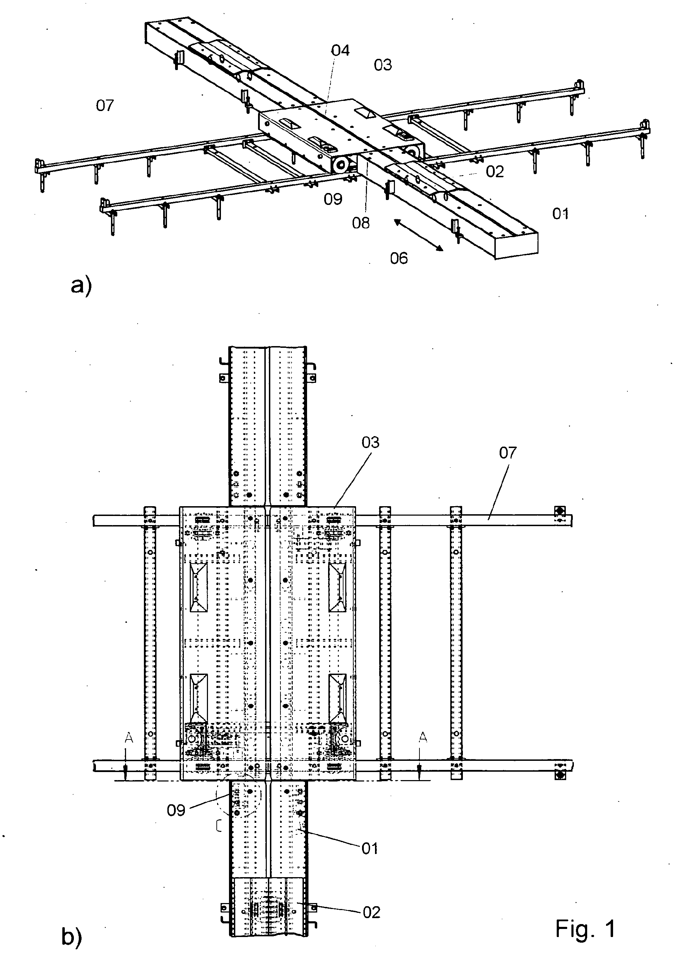

In Fig. 1 ist in Abb. a) in perspektivischer Ansicht und in Abb. b) in Draufsicht eine Übergabestelle dargestellt, wie sie beispielsweise an einem Rollenwechsler in einer Rollenrotationsdruckanlage verwendet wird. Auf einer schienengebundenen Transporteinrichtung 01 ist ein Rollenwagen 02 verfahrbar. Auf dem Rollenwagen 02 werden gewöhnlich Materialrollen (nicht dargestellt) liegend transportiert. Zur automatischen Beschickung eines Rollenwechslers wird der Rollenwagen 02 auf einen Transfertisch 03 eingefahren, wobei im Transfertisch 03 eine Transferschiene 04 zur Übernahme des Rollenwagens 02 vorgesehen ist.

Die Bewegungsrichtung des Rollenwagens 02 auf der Transporteinrichtung 01 und bei der Einfahrt in den Transfertisch 03 ist durch den Bewegungspfeil 06 angegeben.

Nach der erfolgten Übergabe der Materialrolle an den Transfertisch 03, befindet sich diese mit dem Rollenwagen 02 auf dem Transfertisch 03 und wird anschließend zur Bestückung des nicht dargestellten Rollenwechslers auf einer Schieneneinrichtung 07 quer zur Bewegungsrichtung 06 verfahren. Anschließend kann die Materialrolle in Spannkonen des Rollenwechslers aufgenommen werden. Dazu kann der Transfertisch 03 weiterhin in der Höhe verstellbar sein.

Dabei ist an der Transporteinrichtung 01 eine STOPP-Position 08 festgelegt, an welcher der Rollenwagen 02 durch eine Verriegelungsvorrichtung 09 angehalten wird, zumindest dann wenn der Transfertisch 03 seine korrekte Übergabeposition noch nicht eingenommen hat. Es ist aber auch möglich (z. B. mit manueller Entriegelung), dass in jedem Fall zunächst ein kurzer Stopp an der STOPP-Position 08 erfolgt, auch wenn der Transfertisch 03 schon in der korrekten Übergabeposition ist.

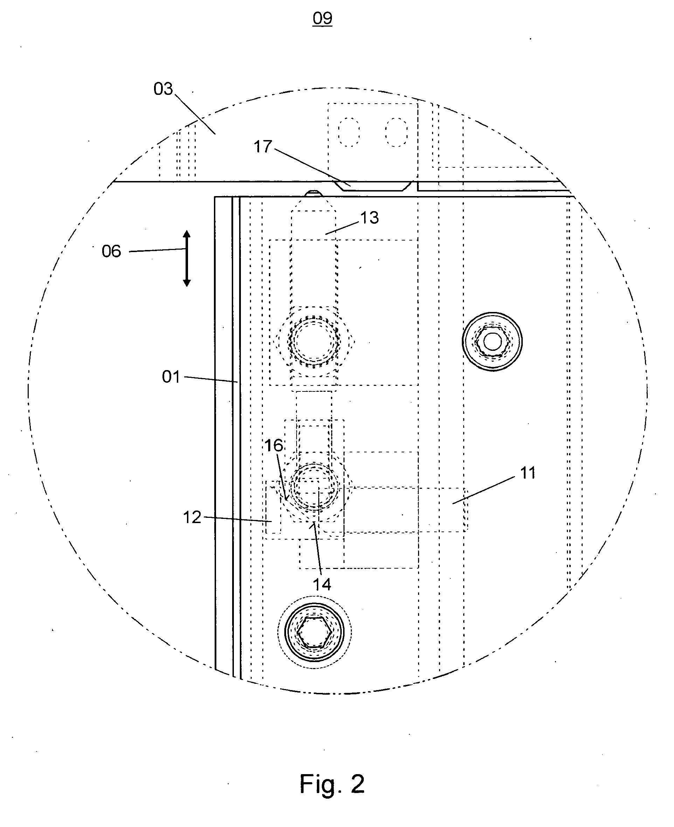

In Abb. b) der Fig. 1 ist ein Detail C gekennzeichnet, welches in Fig. 2 vergrößert dargestellt ist. Es zeigt die Verriegelungsvorrichtung 09. In dieser Darstellung befindet sich der Transfertisch 03 in der Übergabeposition, in welcher die Verriegelung nicht aktiv ist. Die Verriegelungsvorrichtung 09 umfasst eine Sperrklinke 11 mit einer Betätigungsvorrichtung 12, welche als Keiltrieb ausgeführt ist. Ein als Druckstift 13 ausgeführter Positionssensor 13 weist eine Keilfläche 14 auf, die mit einer Keilfläche 16 an der Betätigungsvorrichtung 12 in kraftschlüssigem Eingriff steht, und ist in der Transporteinrichtung 01 in Bewegungsrichtung 06 beweglich gelagert. Die Keilfläche 14 bildet mit der Keilfläche 16 an der Betätigungsvorrichtung 12 den Keiltrieb. Am Transfertisch 03 ist ein als mechanischer Anschlag 17 ausgeführter Positionsmelder 17 vorgesehen, welcher beim Einfahren des Transfertisches 03 an die Übergabestelle den Druckstift 13 (Positionsmelder 17) betätigt und in Richtung der Betätigungsvorrichtung 12 verschiebt. Durch den Kraftschluss der Keilflächen 14; 16 wird die Sperrklinke 11 in die dargestellte Position verbracht. Ist der Transfertisch 03 nicht an der Übergabeposition, so ragt der Druckstift 13 aus der Transporteinrichtung 01 heraus, die Betätigungsvorrichtung 12 drückt die Sperrklinke 11 beispielsweise über eine Feder in die nicht dargestellte verriegelte Position.

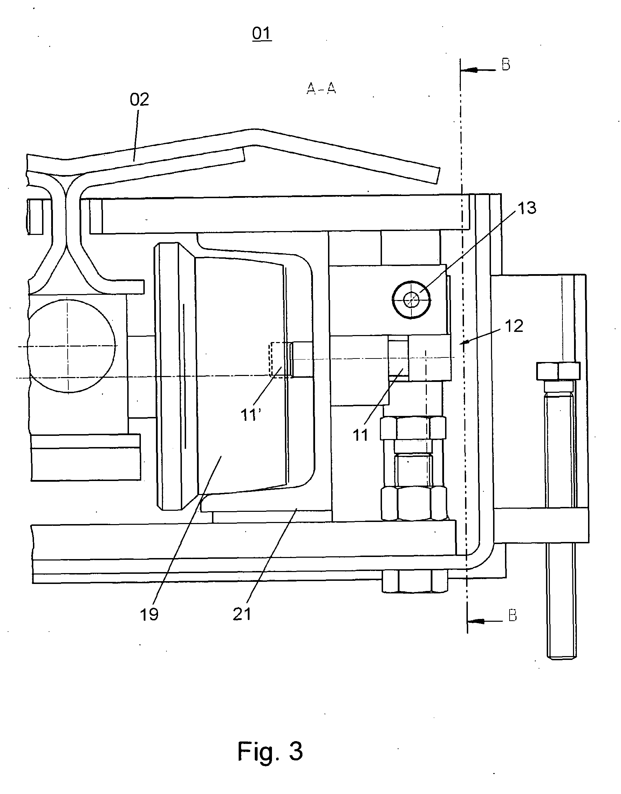

In Fig. 3 ist die Transporteinrichtung 01 in einer Teilansicht im Schnitt gemäß der Schnittlinie A - A in Fig. 1 b) dargestellt. Der Rollenwagen 02 wird mittels Rädern 19 in einer Fahrschiene 21 der Transporteinrichtung 01 bewegt. Auch in dieser Fig. 3 ist die entriegelte Position der Verriegelungsvorrichtung 09 dargestellt. Der Druckstift 13 wirkt über die Betätigungsvorrichtung 12 durch ein Zusammenwirken der Keilflächen 14 und 16 auf die Sperrklinke 11 und hält diese in der entriegelten Position. Sobald der Druckstift 13 nicht durch den Anschlag 17 betätigt wird, wird die Sperrklinke 11 über die Betätigungsvorrichtung 12, an der eine Druckfeder vorgesehen sein kann, durch eine Öffnung in der Fahrschiene 21 in die gestrichelt dargestellte verriegelte Position 11' bewegt und die Fahrschiene 21 damit verriegelt. Die Räder 19 des Rollenwagens 02 werden dann von der Sperrklinke 11' blockiert.

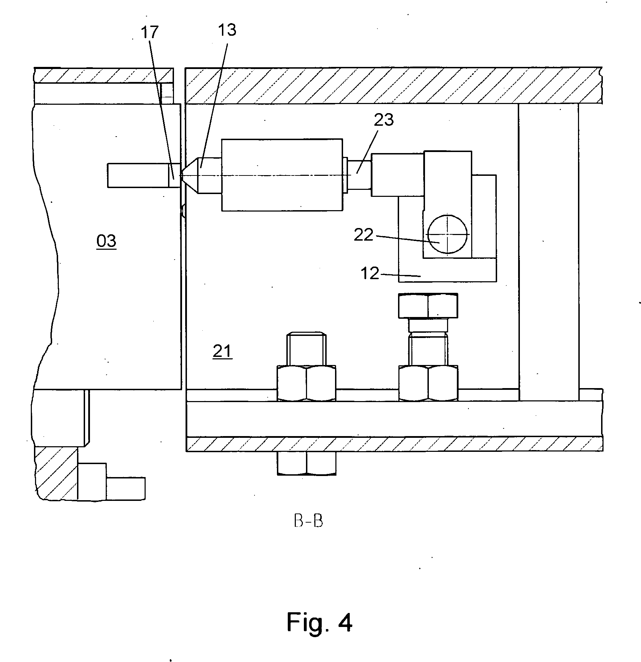

Fig. 4 zeigt eine Teilansicht im Schnitt der Übergabestelle gemäß der Schnittlinie B - B in Fig. 3. Der Druckstift 13 wurde vom Anschlag 17 in die entriegelte Stellung verbracht. Die Betätigungsvorrichtung 12 wurde von der Keilfläche 14 des Positionssensors 13 in die in Fig. 3 dargestellte entriegelte Stellung verschoben.

Wenn der Transfertisch 03 nicht an seiner für die Übergabe der Materialrolle erforderlichen Position (Übergabeposition) ist, drückt eine Druckfeder 22 die Sperrklinke 11 in Richtung der Fahrschiene 21 und über den Keiltrieb gleichzeitig den Druckstift 13 in die Stellung, in der ihm kein Anschlag 17 gegenüber steht. Über eine Einstellmutter oder Gewindehülse 23 kann der Arbeitsweg des Druckstiftes 13 und damit die Betätigungsvorrichtung 12 justiert werden.

### Bezugszeichenliste

- 01: Transporteinrichtung
- 02: Transportmittel, Rollenwagen
- 03: Transportmittel, Transfertisch
- 04: Transferschiene
- 05: -
- 06: Bewegungsrichtung (02)
- 07: Schieneneinrichtung
- 08: STOPP-Position
- 09: Verriegelungsvorrichtung
- 10: -
- 11: Sperrklinke
- 12: Betätigungsvorrichtung
- 13: Druckstift, Positionssensor
- 14: Keilfläche
- 15: -
- 16: Keilfläche
- 17: Anschlag, Positionsmelder
- 18: -
- 19: Rad
- 20: -
- 21: Fahrschiene
- 22: Druckfeder
- 23: Einstellmutter

- 11': Sperrklinke, Position

## Patentansprüche

1. Rollenlogistiksystem mit
- einer ersten Transporteinrichtung (01) mit einer Fahrschiene (21);
- einer zweiten unterschiedlichen Transporteinrichtung;
- einem auf der Fahrschiene (21) der ersten Transporteinrichtung (01) fahrbaren Rollenwagen (02), auf welchem Rollen transportiert werden;
- einem in der zweiten Transportrichtung fahrbaren Transfertisch (03) mit einer Transferschiene (04) zur Übernahme des Rollenwagens (02), wobei in einer Übergabeposition der Rollenwagen (02) auf dem Transfertisch (03) übernehmend fahrend angeordnet ist, und wobei der Rollenwagen (02) nach der Übergabe auf dem Transfertisch (03) angeordnet ist;
- einer Verriegelungsvorrichtung (09) mit einer Sperrvorrichtung, wobei die Sperrvorrichtung eine Fortbewegung des Rollenwagens (02) in der ersten Transporteinrichtung sperrend oder nicht sperrend angeordnet ist, und wobei die Sperrvorrichtung eine Betätigungsvorrichtung (12) aufweist;
**dadurch gekennzeichnet, dass**
die Sperrvorrichtung für den Rollenwagen (02) in Abhängigkeit von einer Position des Transfertisch (03) sperrend angeordnet ist, und die Sperrvorrichtung für den Rollenwagen (02) in einer Übergabeposition des Transfertisches (03) nicht sperrend angeordnet ist,
und dass die Betätigungsvorrichtung (12) in einer Übergabeposition des Transfertisches (03) mittels des Transfertisches (03) betätigt ist.

2. Rollenlogistiksystem nach Anspruch 1, **dadurch gekennzeichnet, dass** die Sperrvorrichtung formschlüssig mit dem Rollenwagen (02) zusammenwirkend angeordnet ist.

3. Rollenlogistiksystem nach Anspruch 1, **dadurch gekennzeichnet, dass** ein Positionsmelder (17) am Transfertisch (03) angeordnet ist.

4. Rollenlogistiksystem nach Anspruch 1, **dadurch gekennzeichnet, dass** ein Positionssensor (13) an dem Rollenwagen (02) angeordnet ist.

5. Rollenlogistiksystem nach Anspruch 3 und 4, **dadurch gekennzeichnet, dass** der Positionssensor (13) den Positionsmelder (17) detektiert und ein FREI-Signal auslöst, wenn der Transfertisch (03) die Übergabeposition eingenommen hat.

6. Rollenlogistiksystem nach Anspruch 4, **dadurch gekennzeichnet, dass** die Betätigungsvorrichtung (12) die Sperrvorrichtung entriegelnd angeordnet ist, wenn die Betätigungsvorrichtung (12) vom Positionssensor (13) ein FREI-Signal erhält.

7. Rollenlogistiksystem nach Anspruch 1, **dadurch gekennzeichnet, dass** die Sperrvorrichtung eine Sperrklinke (11) aufweist, die in die Fahrschiene (21) hineinragt und dabei den Rollenwagen (02) blockiert.

8. Rollenlogistiksystem nach Anspruch 3 oder 4, **dadurch gekennzeichnet, dass** der Positionsmelder (17) ein mechanischer Anschlag (17) ist und der Positionssensor (13) ein Druckstift (13) ist.

9. Rollenlogistiksystem nach Anspruch 8, **dadurch gekennzeichnet, dass** der Druckstift (13) über einen Keiltrieb mit der Betätigungsvorrichtung (12) kraftwirksam verbunden ist.

10. Rollenlogistiksystem nach Anspruch 3 und 4, **dadurch gekennzeichnet, dass** Positionsmelder (17) und Positionssensor (13) durch eine optische, induktive, elektrische oder magnetische Sensoreinheit gebildet werden.

## Claims

1. Reel logistics system having
- a first transport device (01) having a travelling rail (21);
- a second, different transport device;
- a reel carriage (02), which can travel on the travelling rail (21) of the first transport device (01) and on which reels are transported;
- a transfer table (03) which can travel in the second transporting direction and has a transfer rail (04) for receiving the reel carriage (02), wherein, in a transfer position, the reel carriage (02) is arranged on the transfer table (03) in a travelling and receiving manner, and wherein the reel carriage (02) is arranged on the transfer table (03) following the transfer;
- a locking apparatus (09) having a blocking apparatus, wherein the blocking apparatus is arranged so as to block or not to block the continued movement of the reel carriage (02) in the first transport device, and wherein the blocking apparatus has an actuating apparatus (12);
**characterized in that**
the blocking apparatus for the reel carriage (02) is arranged in a blocking manner depending on a position of the transfer table (03), and the blocking apparatus for the reel carriage (02) is arranged in a non-blocking manner in a transfer position of the transfer table (03),
and **in that** the actuating apparatus (12) is actuated by means of the transfer table (03) in a transfer position of the transfer table (03).

2. Reel logistics system according to Claim 1, **characterized in that** the blocking apparatus is arranged such that it interacts in a positively locking manner with the reel carriage (02).

3. Reel logistics system according to Claim 1, **characterized in that** a position indicator (17) is arranged on the transfer table (03).

4. Reel logistics system according to Claim 1, **characterized in that** a position sensor (13) is arranged on the reel carriage (02).

5. Reel logistics system according to Claim 3 and 4, **characterized in that** the position sensor (13) detects the position indicator (17) and triggers a FREE signal when the transfer table (03) has taken up the transfer position.

6. Reel logistics system according to Claim 4, **characterized in that** the actuating apparatus (12) is arranged such that it unlocks the blocking device when the actuating apparatus (12) receives a FREE signal from the position sensor (13).

7. Reel logistics system according to Claim 1, **characterized in that** the blocking apparatus has a pawl (11), which protrudes into the travelling rail (21) and in the process blocks the reel carriage (02).

8. Reel logistics system according to Claim 3 or 4, **characterized in that** the position indicator (17) is a mechanical stop (17) and the position sensor (13) is a pressure pin (13).

9. Reel logistics system according to Claim 8, **characterized in that** the pressure pin (13) is connected in a force-effective manner to the actuating apparatus (12) via a wedge drive.

10. Reel logistics system according to Claim 3 and 4, **characterized in that** the position indicator (17) and the position sensor (13) are formed by an optical, inductive, electric or magnetic sensor unit.

## Revendications

1. Système de logistique pour rouleaux, avec :
- un premier dispositif de transport (01) avec un rail de déplacement (21) ;
- un deuxième dispositif de transport, différent ;
- un chariot à rouleaux (02), déplaçable sur le rail de déplacement (21) du premier dispositif de transport (01), sur lequel sont transportés des rouleaux ;
- une table de transfert (03), déplaçable dans la deuxième direction de transport, avec un rail de transfert (04) pour supporter le chariot à rouleaux (02), sachant que, en une position de transfert, le chariot à rouleaux (02) est disposé en se déplaçant, en assurant une prise en charge, sur la table de transfert (03) et, après le transfert, le chariot à rouleaux (02) est disposé sur le table de transfert (03) ;
- un dispositif de verrouillage (09) avec un dispositif de blocage, le dispositif de blocage étant disposé en bloquant ou en ne bloquant pas un déplacement de progression du chariot à rouleaux (02) dans le premier dispositif de transport, et le dispositif de blocage présentant un dispositif d'actionnement (12) ;
**caractérisé en ce que**
le dispositif de blocage pour le chariot à rouleaux (02) est disposé avec un effet bloquant en fonction d'une position de la table de transfert (03), et le dispositif de blocage pour le chariot à rouleaux (02) étant disposé en n'exerçant aucune effet de blocage, en une position de transfert de la table de transfert (03),
et **en ce que**, en une position de transfert de la table de transfert (03), le dispositif d'actionnement (12) est actionné au moyen de la table de transfert (03).

2. Système de logistique pour rouleaux selon la revendication 1, **caractérisé en ce que** le dispositif de blocage est disposé en coopérant, par une liaison à ajustement de formes, avec le chariot à rouleaux (02).

3. Système de logistique pour rouleaux selon la revendication 1, **caractérisé en ce qu'**un avertisseur de position (17) est disposé sur la table de transfert (03).

4. Système de logistique pour rouleaux selon la revendication 1, **caractérisé en ce qu'**un capteur de position (13) est disposé sur le chariot à rouleaux (02).

5. Système de logistique pour rouleaux selon les revendications 3 et 4, **caractérisé en ce que** le capteur de position (13) détecte l'avertisseur de position (17) et déclenche un signal LIBRE, lorsque la table de transfert (03) a pris la position de prise en charge.

6. Système de logistique pour rouleaux selon la revendication 4, **caractérisé en ce que** le dispositif d'actionnement (12) est disposé en déverrouillant le dispositif de blocage, lorsque le dispositif d'actionnement (12) reçoit un signal LIBRE de la part du capteur de position (13).

7. Système de logistique pour rouleaux selon la revendication 1, **caractérisé en ce que** le dispositif de blocage présente un cliquet de blocage (11), pénétrant, dans le rail de déplacement (21) et bloquant alors le chariot à rouleaux (02).

8. Système de logistique pour rouleaux selon la revendication 3 ou 4, **caractérisé en ce que** l'avertisseur de position (17) est une butée (17) mécanique et le capteur de position (13) et une tige de pressage (13).

9. Système de logistique pour rouleaux selon la revendication 8, **caractérisé en ce que** la tige de pressage (13) est reliée avec un effet dynamique au dispositif d'actionnement (12).

10. Système de logistique pour rouleaux selon les revendications 3 et 4, **caractérisé en ce que** l'avertisseur de position (17) et le capteur de position (13) sont formés par une unité de capteur optique, inductive, électrique ou magnétique.
